# DEMANDE DE BREVET EUROPEEN

(11) **EP 2 439 485 A1**
(43) Date de publication de la demande: **11.04.2012**
(21) Numéro de dépôt: 11183774.6
(22) Date de dépôt: 04.10.2011
(51) Int. Cl.: G01B 5/30, G01B 5/00, E04G 23/02, G01M 5/00, G01B 11/16

(54) **Dispositif de mesure de l'évolution d'une fissure, notamment d'un mur de bâtiment**

(30) Priorité: 05.10.2010 FR 1058074
(71) Demandeur: Ginger CEBTP, 78990 Elancourt (FR)
(72) Inventeur: Bourdet, Frédéric, 78180 MONTIGNY LE BRETONNEUX (FR)
(74) Mandataire: Parzy, Benjamin Alain

(57) **Abrégé**

L'invention est relative à un dispositif de mesure d'évolution de fissure sur un mur ou similaire, comportant un appareil de mesure (20) qui comporte un corps (21) portant un organe de mesure (22) ; une cible (11) comportant une base (12) pour la fixation de la cible sur le mur d'un côté de la fissure et présentant une surface cible (15) ; et une platine (1) comportant une base (2) pour la fixation de la platine sur le mur de l'autre côté de la fissure et qui porte des moyens de positionnement (5) aptes à coopérer avec des moyens de positionnement (23) homologues du corps de l'appareil de mesure de sorte que lorsque l'appareil de mesure est en place sur la platine, l'organe de mesure puisse coopérer avec la surface cible.

## Description

L'invention concerne un dispositif de mesure de l'évolution d'une fissure, notamment d'un mur de bâtiment.

### ARRIERE PLAN DE L'INVENTION

Il est connu un dispositif de mesure de l'évolution d'une fissure, appelé « déformètre à billes » et proposé par le déposant, comportant d'une part des billes qui sont fixées de part et d'autre des lèvres de la fissure, et un appareil de mesure qui comporte deux parties coulissantes relativement et qui possèdent chacune un réceptacle pouvant être adapté sur l'une des billes. L'application de l'appareil de mesure sur les billes permet de mesurer la distance entre les billes, et, partant, de suivre l'évolution de la fissure. Ces appareils sont très précis, mais sont relativement onéreux. En outre, leur mise en oeuvre peut être délicate, notamment pour des fissures s'étendant dans des parties difficilement accessibles du mur. En effet, il faut s'assurer que les réceptacles chevauchent bien les billes, ce qui n'est pas toujours facile.

### OBJET DE L'INVENTION

L'invention a pour objet un dispositif de mesure de l'évolution d'une fissure simple à mettre en oeuvre, et moins onéreux que les dispositifs connus.

### RESUME DE L'INVENTION

A cet effet, on propose un dispositif de mesure d'évolution de fissure sur un mur ou similaire, comportant :
- un appareil de mesure qui comporte un corps portant un organe de mesure ;
- une cible comportant une base pour la fixation de la cible sur le mur d'un côté de la fissure et présentant une surface cible ;
- une platine comportant une base pour la fixation de la platine sur le mur de l'autre côté de la fissure et qui porte des moyens de positionnement aptes à coopérer avec des moyens de positionnement homologues du corps de l'appareil de mesure de sorte que lorsque l'appareil de mesure est en place sur la platine, l'organe de mesure puisse coopérer avec la surface cible.

Une fois la platine et la cible fixées sur le mur de part et d'autre de la fissure, il suffit de rapporter l'appareil de mesure sur la platine comme indiqué pour prendre une mesure rapide et fiable de la distance séparant la surface cible d'une référence liée au corps de l'appareil de mesure, et donc à la platine, ce qui donne ainsi une indication de l'évolution de la fissure.

On aura alors compris que contrairement au déformètre ou aux jauges de mesure de fissure, l'appareil de mesure de l'invention n'est positionné que sur la platine, c'est-à-dire d'un côté de la fissure, et ne fait que coopérer avec la cible placée de l'autre côté de la fissure.

La platine et la cible sont des pièces très simples à fabriquer, tandis que le positionnement de l'appareil de mesure sur la platine peut être assuré par des moyens de positionnement très simples, par exemple un simple appui plan très facile à mettre en oeuvre et peu onéreux à fabriquer.

### BREVE DESCRIPTION DES DESSINS

- La figure 1 est une vue en perspective d'un mur fissuré sur lequel la platine et la cible du dispositif de l'invention ont été fixées ;
- la figure 2 est une vue en perspective d'un appareil de mesure composant le dispositif de mesure de l'invention ;
- la figure 3 est une vue en perspective de l'appareil de mesure en position sur la platine.

### DESCRIPTION DETAILLEE DE L'INVENTION

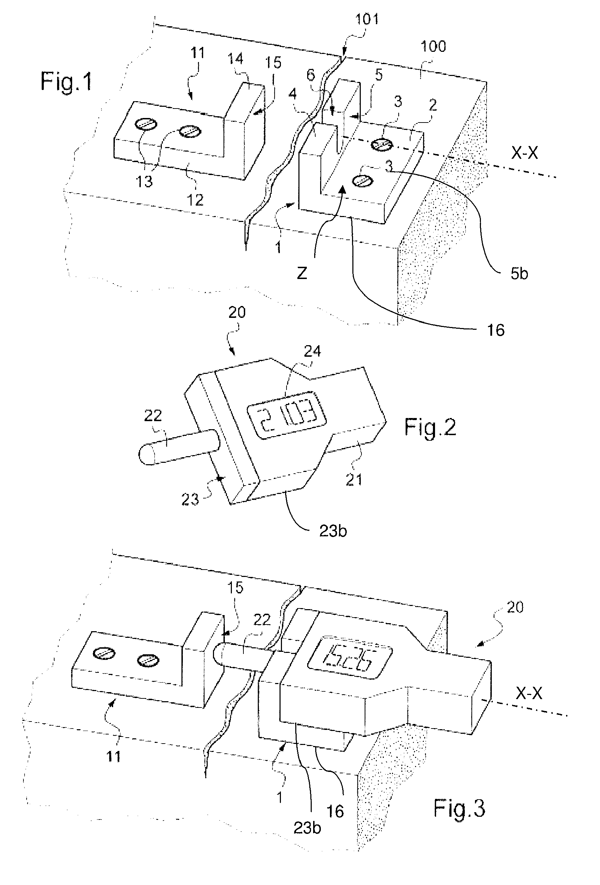

Le dispositif de l'invention est destiné à mesurer les évolutions dans le temps d'une fissure dans une partie de bâtiment. Ici, on a représenté sur la figure 1 un mur 100 présentant une fissure 101 dont les lèvres sont susceptibles de s'écarter.

Conformément au mode particulier de réalisation de l'invention illustré ici, le dispositif de l'invention comporte tout d'abord une platine 1, préférentiellement monobloc, comportant une base 2 destinée à être posée contre le mur pour être fixée sur celui-ci, ici à l'aide de deux vis 3, d'un côté de la fissure 101. De la base 2 s'étend une paroi 4 définissant une surface plane d'appui 5 qui s'étend perpendiculairement au mur lorsque la platine 1 est fixée sur le mur. La platine 1 est fixée sur le mur de sorte que la surface d'appui 5 soit sensiblement parallèle à la fissure 101. La paroi 4 comporte une encoche centrale 6.

Le dispositif de l'invention comporte ensuite une cible 11, préférentiellement monobloc, comportant une base 12 destinée à être posée contre le mur pour être fixée sur celui-ci, ici à l'aide de deux vis 13, de l'autre côté de la fissure. De la base 12 s'étend une paroi 14 définissant une surface plane de contact 15 qui s'étend perpendiculairement au mur lorsque la cible 11 est fixée sur le mur. La cible 11 est fixée sur le mur de sorte que la surface cible 15 soit sensiblement parallèle à la fissure.

En référence à la figure 2, le dispositif de l'invention comporte enfin un appareil de mesure 20, dont le corps 21 porte un organe de mesure équipé ici d'un index 22 coulissant. L'index 22 est rappelé en position sortie par un organe ressort interne non visible ici. Le corps 21 comporte une face avant formant un plan d'appui 23 du corps 21 contre la surface d'appui 5 de la platine 1. Le plan d'appui 23 s'étend perpendiculairement à une direction de coulissement de l'index 22. Ici, l'appareil de mesure 20 comporte un écran 24 pour indiquer une distance entre le plan d'appui 23 et l'extrémité de l'index 22.

Pour mesurer l'évolution de la fissure, il suffit, comme illustré en figure 3, d'engager l'index 22 dans l'encoche 6 de sorte à amener l'extrémité de l'index 22 en contact avec la surface cible 15 de la cible 11, puis d'avancer le corps de l'appareil de mesure 20 jusqu'à ce que le plan d'appui 23 s'étende contre la surface d'appui 5 de la platine 1, comme illustré ici.

Le chiffre sur l'écran d'affichage donne alors la distance entre la surface d'appui 5 de la platine 1 et la surface cible 15 de la cible 11. En mesurant régulièrement cette distance, on obtient une mesure de l'évolution dans le temps de la fissure.

Comme on le voit dans le mode de réalisation présenté aux figures 1 et 3, les moyens de positionnement de la platine comportent une surface d'appui complémentaire 5b qui est plane et perpendiculaire à la surface plane 5. Cette surface d'appui complémentaire 5b est adaptée à recevoir l'appareil de mesure 20 en appui plan via une surface d'appui homologue 23b de la surface complémentaire 5b formée sur l'appareil de mesure 20. Cette surface d'appui complémentaire 5b est parallèle à une face d'appui 16 de la platine 1 contre le mur 100.

L'invention n'est bien sûr pas limitée au mode particulier de réalisation qui vient d'être décrit, mais englobe au contraire toute variante entrant dans le champ défini par les revendications.

En particulier, bien que l'on ait indiqué ici que l'organe de mesure soit un index monté coulissant, on pourra bien évidemment utiliser tout autre type d'organe de mesure, comme par exemple un laser, ou encore un organe de mesure à ultrasons. Dans ces exemples, l'organe de mesure émet un rayonnement électromagnétique ou sonore apte à coopérer avec la surface cible 15 par réflexion sur celle-ci plutôt que par contact mécanique.

Bien que l'on ait indiqué que le positionnement de l'appareil de mesure sur la platine se faisait par appui plan, on pourra bien sûr utiliser tout autre moyen de positionnement de l'appareil de mesure sur la platine, comme par exemple :
- un relief polygonal saillant de la base de la platine adapté à entrer dans une empreinte homologue pratiquée dans le corps de l'appareil de mesure ; et/ou comme indiqué ci-après
- un cône.

Dans ce dernier exemple, non représenté sur les figures, les moyens de positionnement homologues de l'appareil de mesure 20 comportent un cône d'appui défini sur le corps 21 de l'appareil de mesure. Ce cône d'appui défini sur le corps de l'appareil de mesure est destiné à être rapporté contre la surface d'appui de la platine qui a une forme complémentaire du cône d'appui de l'appareil de mesure 20. Préférentiellement, cette forme complémentaire appartenant à la platine est aussi conique permettant préférentiellement un emboîtement conique. Dans cet exemple l'appareil de mesure 20 peut être positionné par rapport à la platine 1 par appui cône contre cône.

Idéalement selon ce mode, le cône d'appui défini sur le corps de l'appareil de mesure 20 possède un axe principal de révolution qui s'étend parallèlement à une direction de coulissement de l'index 22. En d'autres termes l'indexe s'étend à l'intérieur du cône de l'appareil de mesure et selon l'axe principal du cône.

Ce mode de réalisation est avantageux car il limite, au moment de la mesure, les possibilités de mouvements parasites de l'appareil de mesure 20 par rapport à la platine 1 permettant ainsi de réduire les incertitudes de mesures.

Comme on le voit sur les figures 1 et 3, la platine 1 est formée de manière à présenter une zone Z d'accès libre délimitée par les surfaces d'appui 5, 5b permettant le passage d'une main d'un opérateur de mesure et le passage de l'appareil de mesure 20 en appui contre ces surfaces d'appui 5, 5b. Ainsi on peut réaliser la mesure sans devoir solidariser l'appareil de mesure 20 et la platine 1. La platine est ainsi adaptée à permettre un déplacement libre de l'appareil de mesure 20 par rapport à la platine 1 selon un mouvement d'éloignement de l'appareil de mesure par rapport à la surface plane 5. Dès lors, aucune butée ne s'oppose à l'éloignement de l'appareil de mesure 20 par rapport à la platine 1. La zone Z d'accès libre permet ainsi le déplacement libre de l'appareil de mesure 20 par rapport à la platine 1 selon un mouvement d'éloignement de l'appareil de mesure par rapport à la surface d'appui 5 se faisant selon un axe d'éloignement X-X parallèle au mur plan sur lequel est fixée la platine. Par ces caractéristiques, l'appareil de mesure est positionnable librement contre la surface 5 de la platine sans avoir à utiliser un outil d'assemblage ou un quelconque moyen de blocage de l'appareil de mesure contre la platine. Pendant la mesure, l'appareil 20 peut être maintenu à la main par l'opérateur.

D'autre part, bien que l'on ait indiqué que la platine et la cible sont vissées de part et d'autre de la fissure, ou pourra fixer la platine et la cible par tout autre moyen, par exemple par collage. On note enfin que les moyens de positionnement homologues du corps 21 de l'appareil de mesure 20 peuvent prendre toutes formes permettant un appui plan contre la surface plane 5 de la platine 1, comme un appui en au moins trois points éloignés les uns des autres pour coopérer avec cette surface plane 5.

## Revendications

1. Dispositif de mesure d'évolution de fissure sur un mur ou similaire, comportant :
- un appareil de mesure (20) qui comporte un corps (21) portant un organe de mesure (22) ;
- une cible (11) comportant une base (12) pour la fixation de la cible sur le mur d'un côté de la fissure et présentant une surface cible (15) ;
- une platine (1) comportant une base (2) pour la fixation de la platine sur le mur de l'autre côté de la fissure et qui porte des moyens de positionnement (5) aptes à coopérer avec des moyens de positionnement (23) homologues du corps de l'appareil de mesure de sorte que lorsque l'appareil de mesure est en place sur la platine, l'organe de mesure puisse coopérer avec la surface cible.

2. Dispositif de mesure selon la revendication 1 dans lequel de la base (12) de la cible (11) s'étend une paroi (14) définissant ladite surface cible (15), cette surface cible (15) s'étendant perpendiculairement au mur lorsque la cible (11) est fixée sur ce mur.

3. Dispositif de mesure selon l'une quelconque des revendications 1 ou 2 dans lequel :
- les moyens de positionnement (5) de la platine comportent une surface d'appui (5) définie sur une paroi (4) solidaire de la base (2) de la platine (1) ; et
- les moyens de positionnement homologues de l'appareil de mesure sont définis sur le corps (21) de l'appareil de mesure et sont destinés à être rapportés contre la surface d'appui (5) de la platine.

4. Dispositif selon la revendication 3, dans lequel la surface d'appui (5) définie sur la paroi (4) solidaire de la base, est une surface d'appui plane disposée par rapport à la base (2) de la platine (1) de manière que lorsque la platine (1) est fixée sur le mur, cette surface d'appui plane (5) s'étende perpendiculairement au mur.

5. Dispositif de mesure selon l'une quelconque des revendications 1 à 4, dans lequel les moyens de positionnement homologues de l'appareil de mesure comportent un plan d'appui (23) qui est défini sur le corps (21) de l'appareil de mesure et qui est destiné à être rapporté contre la surface d'appui de la platine.

6. Dispositif de mesure selon l'une quelconque des revendications 1 à 4, dans lequel les moyens de positionnement homologues de l'appareil de mesure comportent un cône d'appui qui est défini sur le corps (21) de l'appareil de mesure et qui est destiné à être rapporté contre la surface d'appui de la platine qui est de forme complémentaire du cône d'appui de l'appareil de mesure (20), cette forme complémentaire étant préférentiellement conique.

7. Dispositif selon l'une quelconque des revendications 1 à 6, dans lequel l'organe de mesure de l'appareil de mesure comprend un index coulissant (22) ayant une extrémité adaptée à venir au contact de la surface cible (15) de la cible (11).

8. Dispositif selon les revendications 5 et 7, dans lequel le plan d'appui (23) défini sur le corps (21) de l'appareil de mesure s'étend perpendiculairement à une direction de coulissement de l'index (22).

9. Dispositif selon les revendications 5 et 7, dans lequel le cône d'appui défini sur le corps de l'appareil de mesure possède un axe principal de révolution qui s'étend parallèlement à une direction de coulissement de l'index (22).

10. Dispositif selon l'une quelconque des revendications précédentes combinée à la revendication 7, dans lequel la platine (1) comporte une encoche (6) pour le passage de l'index (22).

11. Dispositif selon l'une quelconque des revendications 1 à 10, dans lequel l'organe de mesure de l'appareil de mesure comprend des moyens de mesure par rayonnement comme un laser, ces moyens de mesure par rayonnement étant aptes à émettre un rayonnement apte à coopérer par réflexion sur la surface cible (15) de la cible (11).

12. Dispositif selon l'une quelconque des revendications précédentes combinée à la revendication 3, dans lequel l'appareil de mesure (20) est positionné par rapport à la platine (1) par appui contre la surface d'appui (5) de cette platine, et dans lequel la platine (1) est formée de manière à présenter une zone d'accès libre permettant le déplacement libre de l'appareil de mesure (20) par rapport à la platine (1) selon un mouvement d'éloignement de l'appareil de mesure par rapport à la surface d'appui (5), ce mouvement d'éloignement étant selon un axe d'éloignement (X-X) parallèle au mur lorsque la platine est fixée sur le mur.

13. Dispositif selon l'une quelconque des revendications précédentes combinée à la revendication 3, dans lequel les moyens de positionnement (5) de la platine (1) comportent une surface d'appui complémentaire (5b) plane perpendiculaire à la surface plane (5) et adaptée à recevoir l'appareil de mesure en appui plan, cette surface complémentaire étant parallèle à une face d'appui plane (16) de la platine contre le mur (100).

14. Dispositif selon l'une quelconque des revendications précédentes, dans lequel la platine et la cible sont deux pièces monoblocs.
